(19) **Europäisches Patentamt / European Patent Office / Office européen des brevets**

(11) **EP 1 405 135 B1**

(12) **FASCICULE DE BREVET EUROPEEN**

(45) Date de publication et mention de la délivrance du brevet:
**19.09.2018   Bulletin 2018/38**

(21) Numéro de dépôt: **02784819.1**

(22) Date de dépôt: **10.07.2002**

(51) Int Cl.:
*G02F 1/153* (2006.01)     *G02F 1/161* (2006.01)

(86) Numéro de dépôt international:
**PCT/FR2002/002414**

(87) Numéro de publication internationale:
**WO 2003/007065 (23.01.2003 Gazette 2003/04)**

(54) **DISPOSITIF ELECTROCOMMANDABLE ELECTROCHROME A PROPRIETES OPTIQUES ET/OU ENERGETIQUES VARIABLES**

ELEKTRISCH ANSTEUERBARE ELEKTROCHROME VORRICHTUNG MIT OPTISCH UND/ODER ENERGETISCH VARIABLEN EIGENSCHAFTEN

ELECTRICALLY CONTROLLABLE ELECTRCHROMIC DEVICE HAVING VARIABLE OPTICAL AND/OR ENERGETIC PROPERTIES

(84) Etats contractants désignés:
**AT BE BG CH CY CZ DE DK EE ES FI FR GB GR IE IT LI LU MC NL PT SE SK TR**

(30) Priorité: **12.07.2001   FR 0109315**

(43) Date de publication de la demande:
**07.04.2004   Bulletin 2004/15**

(73) Titulaire: **SAINT-GOBAIN GLASS FRANCE**
**92400 Courbevoie (FR)**

(72) Inventeurs:
- **BETEILLE, Fabien**
  **31250 Revel (FR)**
- **DUBRENAT, Samuel**
  **F-75017 Paris (FR)**
- **GIRON, Jean-Christophe**
  **52074 Aachen (DE)**

(74) Mandataire: **Saint-Gobain Recherche**
**Département Propriété Industrielle**
**39 Quai Lucien Lefranc**
**93300 Aubervilliers (FR)**

(56) Documents cités:
WO-A-99/17890          US-A- 4 852 979
US-A- 5 530 581          US-A- 5 833 070
US-A1- 2001 005 274

- **PATENT ABSTRACTS OF JAPAN vol. 011, no. 223 (P-597), 21 juillet 1987 (1987-07-21) & JP 62 040432 A (TOYOTA CENTRAL RES & DEV LAB INC), 21 février 1987 (1987-02-21)**
- **PATENT ABSTRACTS OF JAPAN vol. 017, no. 483 (M-1472), 2 septembre 1993 (1993-09-02) & JP 05 116254 A (NITTO DENKO CORP), 14 mai 1993 (1993-05-14)**

**EP 1 405 135 B1**

**Description**

L'invention concerne les dispositifs électrocommandables à propriétés optiques et/ou énergétiques variables. Elle s'intéresse plus particulièrement aux dispositifs utilisant des systèmes électrochromes ou viologènes, fonctionnant en transmission ou en réflexion. Elle peut s'appliquer également à d'autres systèmes du type électroluminescents, valves optiques ...

Des exemples de systèmes viologènes sont décrits dans les brevets US-5 239 406 et EP-612 826.

Les systèmes électrochromes ont été très étudiés. Ils comportent de façon connue généralement deux couches de matériaux électrochromes séparées par un électrolyte et encadrées par deux électrodes. Chacune des couches électrochromes, sous l'effet d'une alimentation électrique, peut insérer réversiblement des cations, ce qui entraîne une modification dans ses propriétés (par exemple pour l'oxyde de tungstène, une coloration d'un bleu pâle à un bleu nuit).

Les systèmes électrochromes les plus prometteurs sont les systèmes « tout solide », c'est-à-dire ceux dont toutes les couches, et tout particulièrement l'électrolyte, sont de nature essentiellement minérale : on peut en effet déposer successivement sur le même substrat toutes les couches, par le même type de technique, notamment la pulvérisation cathodique. Des exemples de ces systèmes « tout solide » sont détaillés dans les brevets EP-867 752, EP-831 360, WO 00/03289 et WO 00/57243.

Il existe aussi d'autres systèmes électrochromes, notamment ceux où l'électrolyte est une couche à base d'un polymère ou d'un gel, les autres couches étant généralement minérales (on peut se reporter par exemple aux brevets EP-253 713 et EP-670 346).

On a aussi des systèmes électrochromes où l'ensemble des couches est à base de polymères, on parle alors de systèmes « tout polymère ».

L'invention s'intéresse notamment aux systèmes électrochromes dits « tout solide ».

Beaucoup d'applications ont déjà été envisagées pour ces systèmes. Il s'est agit, le plus généralement, de les employer comme vitrages pour le bâtiment ou comme vitrages pour véhicule, notamment en tant que toit auto, ou encore, fonctionnant alors en réflexion et non plus en transmission, en tant que rétroviseur anti-éblouissement.

Ces systèmes ont en commun le fait qu'ils peuvent, à plus ou moins grande échelle, être sensibles aux agressions mécaniques, chimiques, au contact de l'eau, à des échanges avec l'extérieur. C'est la raison pour laquelle, pour préserver leur bon fonctionnement, ces systèmes « actifs » sont usuellement disposés entre deux substrats protecteurs rigides. Dans le cas d'un système électrochrome « tout solide », on dépose généralement toutes les couches du système sur un substrat en verre, que l'on vient feuilleter ensuite à un second verre par une feuille thermoplastique, de façon à ce que le système actif se trouve entre deux verres. Dans le cas d'un système électrochrome où l'électrolyte est en polymère, on dépose généralement une partie des couches minérales sur l'un des verres, le reste sur l'autre verre, et on assemble ensuite les deux verres à l'aide de film électrolyte polymère. (On peut ensuite feuilleter l'ensemble à un troisième verre par une feuille thermoplastique).

En prévoyant en outre des moyens d'étanchéification périphériques appropriés, le système actif est donc, notamment dans ces deux cas de figure, parfaitement protégé, le verre étant un matériau particulièrement inerte, constituant notamment une excellente barrière à l'eau et aux gaz en général.

Cependant, ces configurations à plusieurs substrats verriers peuvent, pour certaines applications, présenter des inconvénients, notamment en termes de poids, d'encombrement ou d'adaptabilité pour épouser des formes particulières.

L'invention a alors pour objet la mise au point de nouvelles configurations pour des dispositifs incluant ce type de système actif, configurations qui puissent répondre notamment à un besoin d'allégement, d'encombrement réduit et/ou qui puissent adopter des formes plus variées, ceci sans que ces améliorations ne se fassent au détriment de la protection du système actif vis-à-vis de l'extérieur.

La demande JP 62-040432 divulgue un élément électrochrome tout solide obtenu par dépôt de couches minces sur un substrat transparent. L'empilement électrochrome est ensuite encapsulé par une composition organique, polymérisable par plasma, contenant du méthane, de l'acétylène, du furane, de l'acide acrylique et du tétrafluoroéthylène.

Le brevet US 5 833 070 divulgue des films en poly(chlorotrifluoroéthylène) présentant une bonne perméabilité à l'humidité. Ces films sont obtenus par extrusion à température modérée, puis étirage à basse température. Ils peuvent servir à protéger des dispositifs électroluminescents, stratifiés entre deux substrats en verre ou en matière plastique, contre l'humidité.

Le brevet US 5 530 581 divulgue l'utilisation d'une couche mince à base SiOC:H amorphe pour protéger l'empilement électrochrome d'un dispositif électrochrome contre l'humidité extérieure.

Un dispositif électrochrome comprenant une couche active électrochrome sous forme de gel est divulgué dans la publication US 2001/0005274.

L'invention a tout d'abord pour objet un dispositif électrocommandable à propriétés optiques et/ou énergétiques variables du type électrochrome ainsi que décrit dans la revendication 1 ci-jointe, ce dispositif comprenant un film fonctionnel comportant une couche ou un empilement de couches. Ce film fonctionnel se trouve disposé entre deux substrats extérieurs qui répondent aux critères suivants :

① - l'un au moins est essentiellement transparent,

② - l'un au moins est à base d'un (ou d'une pluralité de) film(s) à base de polymère(s),

③ - chacun de ces deux substrats extérieurs est une barrière à la vapeur d'eau, avec une perméabilité à la vapeur d'eau d'au plus 0,1 $g/m^2/24h$ (selon la norme NF-T30 018).

De plus, au moins un des substrats extérieurs comprend une feuille de polymère halogéné à base de polychlorotrifluoroéthylène (PCTFE).

Au sens de l'invention, on comprend par « dispositif » notamment, tout vitrage fonctionnant en transmission ou en réflexion (miroir) au sens large du terme, c'est-à-dire sans impliquer nécessairement un substrat en verre. Il peut s'agir d'un produit fini, utilisable tel quel, ou un produit intermédiaire, c'est-à-dire un produit utilisable et manipulable tel quel, mais qui est destiné à être apposé à une autre surface, à un vitrage conventionnel par exemple ou un écran de télévision ou d'ordinateur (ou à être incorporé dans une structure de vitrage feuilleté ou multiple).

Au sens de l'invention, on comprend par « substrats extérieurs » les substrats qui encadrent, délimitent le dispositif, ceux dont l'une des faces est susceptible d'être en contact avec l'atmosphère ambiante. Il peut notamment s'agir d'une part du substrat porteur du film fonctionnel (celui sur lequel ont été déposées toutes ou certaines des couches qui le composent) et d'autre part du contre-substrat, celui destiné à protéger le film fonctionnel du côté opposé au substrat-porteur. Différentes configurations seront détaillées par la suite.

L'invention a donc consisté à choisir pour l'un des substrats extérieurs au moins un matériau à base de polymère plutôt que du verre. Les avantages des substrats plastiques au sens large sont nombreux : ils sont plus légers, se cassent moins facilement. Ils permettent de supprimer une opération de feuilletage entre deux verres, opération nécessitant chauffage et mise sous pression des différents composants considérés. Ils peuvent aussi adopter des formes très particulières, des courbures très prononcées. Ils se coupent aux dimensions adhoc généralement facilement. Cependant, ils n'offrent habituellement pas l'étanchéification, l'inertie que garantit le verre, et cela tout particulièrement vis-à-vis de l'eau, notamment sous forme vapeur.

Or, il s'est avéré qu'il était très important que le film fonctionnel, tout particulièrement quand il s'agit d'un film électrochrome, soit isolé de l'humidité environnante, sous forme liquide mais aussi sous forme gazeuse. L'invention a donc consisté à sélectionner des substrats en polymère qui soient malgré tout capables d'offrir une étanchéité à la vapeur d'eau très élevée, en tout cas suffisante pour ne pas détériorer les propriétés du film fonctionnel.

Avantageusement, l'un des deux substrats extérieurs, en verre ou à base de polymère(s), est le substrat sur lequel au moins une partie des couches du film fonctionnel, notamment l'ensemble des couches, a été déposée, soit par contact direct, soit par l'intermédiaire d'une couche d'adhésion. Tout dépend du type de substrat et du type de couches. Ainsi, sur du verre, on peut déposer directement des couches minérales, par pyrolyse ou par pulvérisation cathodique. Par contre, sur des substrats à base de polymère, il peut être nécessaire de déposer d'abord une couche destinée à permettre le dépôt à l'accrochage de ces couches minérales. Cette couche « adhésive » peut d'ailleurs être très fine, et même discontinue. Elle peut être greffée à la surface du substrat. Elle peut être remplacée ou complétée par un traitement superficiel du substrat (du type texturation ou autres) sur lequel on reviendra plus loin.

Le film fonctionnel peut être avantageusement l'un des films électrochromes décrits dans le préambule de la présente demande, notamment un film électrochrome « tout solide ». L'invention peut cependant s'appliquer de façon similaire à d'autres systèmes électrocommandables, du type viologène, du type électroluminescent (un exemple en est décrit dans le brevet FR-2 770 222), du type valve optique (un exemple en est décrit dans le brevet WO 93/09460), du type système à cristaux liquides (dont des exemples sont décrits dans les brevets EP-88 126, EP-268 877, EP-238 164, EP-357 234, EP-409 442, EP-964 288). Elle s'applique ainsi à tout système/vitrage comprenant au moins une couche mince susceptible de se détériorer par contact avec des espèces gazeuses provenant de l'atmosphère ambiante, tout particulièrement la vapeur d'eau.

Si l'un des substrats extérieurs est en verre, il possède de manière inhérente le niveau d'étanchéité vis-à-vis de la vapeur d'eau requis, notamment dans les épaisseurs habituelles (1 à 8 mm par exemple).

Par contre, quand l'un des substrats extérieurs (ou les deux) est à base de polymère, l'invention propose plusieurs variantes pour qu'ils atteignent également le niveau requis.

Ces variantes sont non limitatives, et alternatives ou cumulatives.

Selon l'invention, un au moins des substrats extérieurs comprend une feuille de polymère halogéné à base de PCTFE, notamment polyhalogéné (contenant deux types d'halogènes différents au moins). Ce type de polymère tend en effet à être hydrophobe, et également à servir de barrière efficace à la vapeur d'eau. Cela est tout particulièrement le cas du polychlorotrifluoroéthylène (PCTFE) ou de l'un de ses dérivés. Le PCTFE présente en effet une perméabilité à la vapeur d'eau de l'ordre de 0,01 à 0,1 $g/m^2/24$ h pour une épaisseur de l'ordre de 20 à 300 ou 250 micromètres (notamment de 100 à 200 micromètres), et il a le grand avantage de pouvoir être transparent. On peut aussi utiliser des co-polymères associant du PCTFE avec d'autres polymères, notamment le fluorure de polyvinylidène. (Des films de PCTFE ou de copolymère PCTFE-PVDF sont commercialisés par la société Allid Signal sous la dénomination Aclar).

Ce type de polymère tend cependant aussi à présenter une faible énergie de surface, ce qui explique pourquoi il a tendance à adhérer insuffisamment à d'autres matériaux, notamment ici aux matériaux du film fonctionnel (que la feuille de polymère joue le rôle de substrat-porteur ou de contre-substrat). On a donc intérêt à traiter la feuille de polymère halogéné, le traitement étant destiné à augmenter l'énergie de surface du matériau: on peut ne traiter que la face destinée à être tournée vers le film fonctionnel, par exemple par un traitement superficiel qui peut consister en un traitement chimique, un traitement électrique par décharge Corona, ou tout autre traitement permettant d'obtenir une texturation superficielle. On peut aussi la munir d'une couche adhésive. Sous le terme de couche adhésive, on peut comprendre une véritable couche continue, par exemple un adhésif double-face ou un adhésif dit de transfert, comme ceux commercialisés par la société 3M, par exemple sous les références 8141 ou 8142. On comprend également sous ce terme de couches discontinues, forment des points d'adhésion répartis à la surface du film polymère. On comprend également sous ce terme une couche greffée chimiquement à la surface du polymère, ou une fine couche d'un autre polymère du type éthylène-vinyl acétate EVA associée par co-extrusion.

Ainsi traité, on peut faire adhérer de façon satisfaisante le film de polymère halogéné au film fonctionnel, voire déposer le film fonctionnel sur ce dernier, par exemple par pulvérisation cathodique.

Selon une première variante, au moins un des substrats extérieurs est constitué d'au moins un film à base de polymère(s) dont on abaisse la perméabilité jusqu'au niveau requis par dépôt sur l'une au moins de ses faces d'un ou plusieurs couches minérales minces.

On comprend par « mince » des couches d'épaisseur interférentielle, c'est-à-dire comprises notamment entre 5 nm et 1 $\mu$m, notamment entre 10 et 500 nm.

De préférence ces couches sont choisies transparentes, et suffisamment denses. Outre leur densité, il est important de les choisir de façon à ce qu'elles ne présentent pas de défaut rompant leur continuité. On peut les choisir parmi les dérivés de silicium comme l'oxyde de silicium, l'oxycarbure ou l'oxynitrure de silicium, le nitrure de silicium et/ou les dérivés d'aluminium comme l'oxyde, l'oxynitrure ou le nitrure d'aluminium. Les couches à base de dérivés de silicium peuvent en outre contenir un peu d'un métal comme l'aluminium ou de bore (additifs permettant de rendre la cible de silice suffisamment conductrice en cas de dépôt par pulvérisation cathodique réactive en présence d'agents oxydants et/ou nitrurants). Il peut aussi s'agir de couches conductrices transparentes à base d'oxydes semi-conducteurs dopés, comme des couches d'oxyde d'indium dopé à l'étain ITO, d'oxyde d'étain dopé par exemple au fluor $SnO_2$:F, d'oxyde de zinc dopé par exemple à l'aluminium ZnO:Al. Ces couches peuvent avantageusement être déposées, de façon connue, par pulvérisation cathodique non réactive, en utilisant des cibles d'oxydes notamment, ou réactive, en utilisant des cibles de Si (dopé Al ou B par exemple comme mentionné plus haut) ou d'Al et des atmosphères réactives contenant suivant les cas un agent oxydant et/ou un agent nitrurant et/ou un agent carboné. Quand il s'agit de couches conductrices, celles-ci peuvent également avantageusement remplir le rôle d'électrode au sein du film fonctionnel, en ayant les caractéristiques, l'épaisseur appropriées.

Selon une seconde variante, l'un au moins des substrats extérieurs comprend un film nanocomposite. On entend par là un film composite organo-minéral, comprenant une matrice polymère dans laquelle on a introduit des composés minéraux de taille nanométrique et à facteur de forme élevé. Il s'agit notamment d'argile exfolié par cisaillement, dans une matrice polymère avant extrusion par exemple. Ces composés minéraux permettent d'augmenter le chemin de diffusion de l'eau à travers le film, et de le rendre ainsi plus imperméable tout en lui conservant l'essentiel de sa transparence, s'il est transparent en l'absence de ces derniers.

Selon une troisième variante, l'un au moins des substrats extérieurs comporte une pluralité de films à base de polymères de perméabilités à la vapeur d'eau différentes, la combinaison des films permettant d'atteindre globalement le niveau de perméabilité requis et éventuellement une adhésion suffisante au film fonctionnel quand ledit substrat extérieur et le film fonctionnel sont en contact direct. L'association de plusieurs films de polymère peut se faire au moment de la fabrication du dispositif dans son ensemble, ou être réalisée au préalable, par co-calandrage, co-extrusion.

En fait, superposer plusieurs films à base de polymères est très intéressant industriellement, car il permet plus de souplesse dans la réalisation et une meilleure gestion des coûts de matières premières.

En effet, par exemple, on peut ne prévoir qu'une feuille de polymère étanche à l'eau la plus mince possible pour obtenir la perméabilité à la vapeur d'eau requise (polymère performant, coûteux, comme le PTCFE) et lui adjoindre une feuille d'un autre polymère beaucoup plus usuel et beaucoup moins coûteux, pour donner à l'ensemble une certaine tenue mécanique par exemple ou permettre de faire adhérer cette feuille au reste du dispositif.

Tout dépend aussi de l'application visée : dans certaines applications, il faudra une certaine rigidité (résistance à la rayure), donc l'adjonction d'un substrat plastique rigide au PCTFE, qui, à des épaisseurs de l'ordre de 100 micromètres (entre 50 et 300 micromètres par exemple), est flexible.

Selon un mode de réalisation non limitatif, le dispositif selon l'invention présente une structure rigide ou semi-rigide, avec au moins l'un des deux substrats extérieurs comprenant un verre, un substrat en polymère rigide comme le polycarbonate PC ou le polyméthacrylate de méthyle PMM (si l'on choisit du PMMA ou du PC plutôt que du verre, on prévoit de l'associer à une barrière à la vapeur d'eau selon l'une des variantes exposées plus haut. Il peut alors ne contenir qu'un seul de ces substrats rigides, avec une configuration du type :

Substrat extérieur rigide 1 / adhésif optionnel / film fonctionnel / adhésif optionnel / substrat extérieur à base de polymère(s) flexible(s)

Par rapport à une configuration à deux verres, l'allégement obtenu est déjà tout à fait significatif dans cette configuration.

Selon un autre mode de réalisation, le dispositif selon l'invention présente une structure flexible, avec les deux substrats extérieurs sous forme de film(s) à base de polymère(s) flexible(s). On a alors un tout nouveau type de « vitrage » au sens large, que l'on peut manipuler, plier, enrouler, dérouler à volonté, ce qui ouvre le champs à quantités de nouvelles applications. On a alors un « vitrage » extrêmement léger, que l'on peut utiliser tel quel (en remplacement de rideaux, comme écran de projection...) On peut aussi l'utiliser pour l'apposer sur des vitrages pré-existants, pour leur donner une nouvelle fonctionnalité (rénovation). On peut aussi l'incorporer dans un vitrage de structure feuilletée, en le disposant entre deux feuilles de polymère thermoplastique puis en feuilletant l'ensemble entre deux verres (pour faire des parebrise par exemple, pour se substituer partiellement ou totalement à des vitrages feuilletés conventionnels).

Bien sûr, le dispositif selon l'invention peut avoir des fonctionnalités supplémentaires, indépendamment de celles conférées par le film fonctionnel. Il peut ainsi comprendre au moins un des revêtements suivants : revêtement réfléchissant au moins une partie des longueurs d'onde situées dans les infrarouges (revêtement anti-solaire ou bas-émissif), revêtement hydrophile ou hydrophobe, revêtement photocatalytique à propriétés anti-salissures (par exemple comprenant du $TiO_2$ cristallisé anatase), un revêtement antireflets, un revêtement de blindage magnétique...

Le dispositif selon l'invention peut fonctionner en transmission (vitrage), ou en réflexion (miroir). Dans ce dernier cas, l'un des substrats extérieurs peut être réfléchissant ou être rendu réfléchissant à l'aide d'un revêtement approprié.

Beaucoup d'applications existent pour ce type de dispositif. Sans caractère limitatif, on peut en énumérer quelques unes : il peut s'agir du domaine de l'aéronautique, pour faire des hublots, des parebrises (par exemple sous forme d'une bande uniquement présente en partie supérieure), des partitions entre différentes zones de l'avion. Il peut s'agir aussi du domaine du bâtiment, pour faire des vitrages extérieurs, des portes ou des cloisons, dans le bâtiment dans le neuf ou pour la rénovation. Il peut s'agir aussi du domaine de l'automobile, avec les rétroviseurs, les toits auto, les vitrages et tout particulièrement la partie supérieure des parebrises, ou de tout autre moyen de locomotion aérien, terrestre (train) ou maritime.

Il peut aussi s'agir du domaine ophtalmique, avec des lunettes utilisant par exemple des substrats en PC. On peut aussi utiliser les dispositifs selon l'invention en tant qu'écran de projection ou d'affichage, en tant qu'élément renforceur de contraste/anti-éblouissement d'écran de télévision ou d'ordinateur ou de téléphone portable ou de tout dispositif d'affichage.

Les vitrages incorporant le dispositif selon l'invention peuvent être des vitrages feuilletés ou des vitrages multiples de type double-vitrage. Dans le cas des vitrages feuilletés, il peut s'agir d'un feuilletage conventionnel avec deux feuilles de verre assemblées par une feuille de polymère thermoplastique. On peut alors les fonctionnaliser en leur apposant un film fonctionnel protégé entre deux substrats en polymère. Il peut aussi s'agir d'un feuilletage dit assymétrique, utilisant une seule feuille de verre et au moins une feuille de polymère de type polyuréthane à propriétés d'absorption d'énergie éventuellement combinée à une autre feuille de polymère à propriétés auto-cicatrisantes (on peut se reporter pour plus de détails aux brevets EP 132 198, EP 131 523 et EP 389 354.) Dans ce cas de figure, on peut insérer le film fonctionnel entre le verre et les feuilles de polymère, avec interposition si nécessaire côté feuille de polymère de la barrière à la vapeur d'eau appropriée selon l'une des variantes décrites plus haut.

L'invention sera détaillée ci-dessous à l'aide d'exemples non limitatifs.

## EXEMPLE 1

Il peut s'agir d'un vitrage électrochrome à un seul verre, selon la configuration suivante :

verre[1] / film fonctionnel[2] / adhésif[3] / PCTFE[4]

Les caractéristiques des différents éléments sont les suivants :

➡ verre (1) : verre silico-sodo-calcique clair conventionnel, d'épaisseur 0,5 à 6 mm, ici de 2,1 mm, de dimensions 50 x 50 cm$^2$

➡ film fonctionnel (2) : système électrochrome « tout solide » comprenant l'empilement suivant :

➤ une couche conductrice inférieure 2, qui est un bicouche constitué d'une première couche SiOC de 50 nm surmontée d'une seconde couche en $SnO_2$:F de 400 nm (deux couches de préférence déposées successivement par CVD sur le verre float avant découpe), alternativement il peut s'agir d'un bicouche avec une première couche en SiON:B de 20 nm surmontée d'une couche d'ITO de 150 nm

➤ une première couche de matériau électrochrome anodique en oxyde d'iridium (hydraté) de 40 à 100 nm ou d'oxyde de nickel hydraté de 40 nm à 400 nm, alliée ou non à d'autres métaux,

➤ une couche en oxyde de tungstène de 100 nm,

➤ une seconde couche en oxyde de tantale hydraté ou d'oxyde de silice hydraté de 100 nm, alternativement il peut s'agir d'une couche d'oxyde d'antimoine ou de zirconium ou un alliage avec un au moins de ces oxydes (de préférence hydraté)

➤ une seconde couche de matériau électrochrome cathodique à base d'oxyde de tungstène WO$_3$ de 100 à 370 nm,

➤ une couche conductrice supérieure d'ITO de 100 à 300 nm.

Toutes ces couches (à part la première) sont déposées de façon connue par pulvérisation cathodique réactive assistée par champ magnétique.

➡ adhésif (3) : adhésif de transfert commercialisé par la société 3M sous la référence 8141 (alternativement on peut utiliser une feuille de polyuréthane ou d'EVA d'épaisseur 0,76 mm),

➡ PCTFE (4) : épaisseur d'environ 150 micromètres

On ne détaille pas la connectique, tous les moyens utilisés pour alimenter en électricité les deux couches électroconductrices et les moyens d'étanchéité périphériques : elle est conventionnelle et décrite dans les brevets cités en préambule.
Elle peut notamment comprendre un réseau de fils conducteurs en contact avec l'électrode supérieure, comme cela est décrit dans le brevet EP - 1 078 299.
On a donc là un vitrage léger (environ 5 kg/m$^2$), mince (en tout, moins de 2,5 mm d'épaisseur), et qui malgré tout présente une durabilité dans sa fonction électrochrome similaire à celle obtenue avec une configuration remplaçant le PCTFE par une feuille thermoplastique et un second verre selon une configuration de verre feuilleté.

## EXEMPLE 2

Il s'agit d'un vitrage électrochrome sans verre, selon la configuration suivante :
polycarbonate(5) /adhésif(3) /PCTFE(4) /adhésif(3) / film fonctionnel(2) / adhésif (3) /PCTFE(4) /adhésif(3) /polycarbonate(5)
Le film fonctionnel, le film de PCTFE et les adhésifs sont les mêmes qu'à l'exemple 1, le polycarbonate PC a une épaisseur d'environ 3 mm (2 à 5 mm).
On obtient un vitrage dont les deux substrats extérieurs sont rigides, ce qui est essentiel dans certaines applications, mais éventuellement plus léger qu'un vitrage ayant deux verres. Ce type de vitrage sans verre peut être utilisé pour équiper des moyens de transport, notamment dans l'aéronautique et dans les blindés, car le PC et d'autres substrats plastiques similaires sont des matériaux particulièrement adaptés pour résister aux chocs par absorption d'énergie. Il peut aussi être avantageusement utilisé en tant que toit-auto.

## EXEMPLE 3 (EXEMPLE COMPARATIF)

Il s'agit d'un vitrage électrochrome sans verre, selon la configuration suivante :

$$\text{PET}^{(1)} / \text{film fonctionnel}^{(2)} / \text{adhésif}^{(3)} / \text{PET}^{(4)} \qquad (1)$$

Le film fonctionnel (2) est le même que dans les cas précédents, tout comme l'adhésif (3).
Ici, les deux substrats extérieurs sont des feuilles de PET (polyéthylènetéréphtalate) de 100 à 300 micromètres d'épaisseur. On peut les remplacer par des feuilles de PC de 0,2 à 1 mm d'épaisseur. On a alors un vitrage "plastique" flexible, qui constitue un produit intermédiaire intéressant.
Une possibilité consiste, en une étape ultérieure, a le feuilleter entre deux verres à l'aide de feuilles de polymère thermoplastique. Une application possible pour les vitrages flexibles selon l'invention consiste ainsi à servir de produit intermédiaire pour faire des vitrages feuilletés du type :

verre/ feuille thermoplastique (comme du polyvinylbutyral PVB ou de l'éthylène vinylacétate EVA ou certains polyuréthanes PU)/ "vitrage plastique flexible selon l'invention"/ feuille thermoplastique à nouveau / verre      (2)

ou des vitrages feuilletés dits asymétriques avec un seul verre et un ou plusieurs films à base de polyuréthane à fonction d'absorption d'énergie et éventuellement auto-cicatrisante (des détails sur ce type de vitrage sont décrits dans les brevets EP 132 198, EP 131 523, EP389 354), ou des vitrages à un seul verre, où la face du film fonctionnel non tournée vers le verre est protégée par un substrat plastique apte à faire barrière à l'eau sous forme vapeur selon l'une des variantes de l'invention.

Ce type de structure est intéressant pour se substituer à des vitrages nécessitant un feuilletage pour des raisons de sécurité. On peut penser notamment aux parebrises d'avion, train, automobile. On peut notamment fabriquer des parebrise dont seule une partie est munie du système fonctionnel, notamment en tant que bande supérieure anti-éblouissement : dans cette zone, on a la structure prémentionnée (2), ou une structure similaire, et dans le reste du parebrise on a exactement la même configuration, mais dépourvue du système fonctionnel ou même dépourvu du "vitrage flexible" dans son ensemble.

On peut ainsi fabriquer/stocker ce produit "intermédiaire" sous la forme de rouleaux de grande taille, que l'on peut ensuite découper aux dimensions voulues.

## EXEMPLE 4

Il s'agit, comme à l'exemple 3, d'un vitrage électrochrome flexible, sans verre, mais utilisant comme substrats extérieurs des films très performants en PCTFE modifiés, selon la configuration suivante :
PCTFE modifié[1] / film fonctionnel[2] / adhésif[3] / PCTFE modifié[4]

Le film fonctionnel (2) est le même que dans les cas précédents, tout comme l'adhésif (3).

Le PCTFE modifié a été modifié en surface pour augmenter son énergie de surface, par exemple par traitement superficiel par décharge Corona. Alternativement, il peut être co-extrudé à une feuille de polymère du type PET.

## EXEMPLE 5

Il s'agit ici de fonctionnaliser un toit-auto conventionnel à base d'un vitrage feuilleté standard de type verre/feuille thermoplastique/verre, en lui adjoignant le film fonctionnel inclue dans une structure de type PCTFE/adhésif/film fonctionnel/film polymère type PET. Dans cette structure, le film fonctionnel est isolé de l'humidité extérieure d'un côté par le PCTFE et de l'autre par le feuilletage du PET au vitrage à l'aide d'une feuille thermoplastique ou d'un adhésif double face.

On a alors la configuration finale :
Verre/ feuille thermoplastique / verre / feuille thermoplastique ou adhésif / PET / film fonctionnel / adhésif / PCTFE

A noter que tous les vitrages fonctionnant en transmission selon l'invention peuvent comporter des empilements de couches minces réfléchissant les infrarouges/anti-solaire : ces couches permettent de protéger si nécessaire le film fonctionnel du rayonnement solaire susceptible de le dégrader à long terme. Elles peuvent en outre servir à protéger au besoin les substrats polymère selon leur configuration dans le vitrage. Ces empilements sont notamment constitués de deux couches d'argent alternées avec des revêtements en diélectrique. Ces empilements peuvent être déposés sur le verre, ou sur des substrats plastiques comme du PET. Des exemples en sont donnés dans les brevets EP 638 528, EP 718 250, EP 844 219, EP 847 965, EP 1 010 677, WO-FR-00-2582. Le brevet EP 825 478 décrit ce type de combinaison, entre un film électroactif de type électrochrome et des couches à fonction thermique.

On peut ainsi avoir dans le vitrage des films polymères en contact sur l'une de leurs faces avec le film fonctionnel et sur leur autre face avec un empilement de couches minces réfléchissant au moins une partie des infrarouges (et/ou des ultraviolets).

## EXEMPLE 6

Il s'agit ici d'une configuration en double-vitrage, de configuration :
Verre/film fonctionnel/adhésif/PCTFE/lame de gaz/verre

Les verres, le film fonctionnel, l'adhésif et le PCTFE sont ceux utilisés dans les exemples précédents. On a bien le film fonctionnel entre d'une part un verre et d'autre part un polymère particulier type PCTFE comme substrats "extérieurs" vis à vis du film fonctionnel, en ce sens que le PCTFE est bien en contact avec du gaz qui, dans les cas les plus courants, est de l'air.

## EXEMPLE 7

Il s'agit ici de faire un rétroviseur, avec la configuration suivante :
Verre/film fonctionnel/polymère réfléchissant dans le visible

Le film fonctionnel et le verre sont identiques à ceux utilisés dans l'exemple 1.

Le polymère est tel qu'il présente la perméabilité d'au plus 1 g/m$^2$/24h voulu.

Dans sa variante selon l'invention, la configuration du rétroviseur est : Verre/film fonctionnel/ couche réfléchissante/adhésif/PCTFE avec le PCTFE et l'adhésif similaires à ceux utilisés à l'exemple 2, et la couche réfléchissante une couche en métal, ici en aluminium d'une épaisseur environ 50 ou 80 nm (20 à 100 nm notamment).

Cette configuration de rétroviseur électrochrome est originale : ici, le système électrochrome est déposé sur le verre, et la couche réfléchissante sur le substrat plastique, alors qu'on fait généralement le contraire. Or déposer le système électroactif sur le verre facilite l'obtention d'un rétroviseur de qualité optique parfaite, point essentiel pour cette application en réflexion.

## EXEMPLE 8 (EXEMPLE COMPARATIF)

Il s'agit d'un rétroviseur similaire à celui décrit à l'exemple 7. La différence réside dans la façon dont on va protéger de la vapeur d'eau le film fonctionnel : au lieu d'utiliser, du côté du film opposé au verre, un film en PCTFE, on épaissie la feuille d'aluminium réfléchissante jusqu'à ce qu'elle atteigne la perméabilité à la vapeur d'eau requise selon l'invention : ici, elle a une épaisseur d'au moins plusieurs micromètres, notamment au moins 5 ou 10 micromètres. L'épaisseur choisie dans cet exemple est de 12 micromètres. La configuration du miroir s'en trouve simplifiée :
Verre/film fonctionnel/ couche réfléchissante "épaisse"/polymère ou vernis protecteur (PET ...)

En conclusion, l'invention permet d'obtenir des « vitrages électrochromes » au sens large qui peuvent s'affranchir du poids et de la rigidité qu'ils avaient jusque là, sans mettre en péril la durabilité de leur fonctionnalité.

Suivant les conditions d'utilisation (utilisation en vitrage extérieur, en vitrage intérieur, exposition ou non au contact des utilisateurs, conditions de température ou d'humidité, etc ...), on peut adapter la composition des substrats extérieurs de ces vitrages, notamment ceux en polymère.

## Revendications

**1.** Dispositif électrocommandable électrochrome, comprenant deux substrats extérieurs et un film fonctionnel électrochrome comprenant une couche ou un empilement de couches et qui est disposé entre lesdits substrats extérieurs, lesdits substrats extérieurs répondant aux conditions suivantes :

- l'un au moins est essentiellement transparent,
- l'un au moins est à base d'un ou d'une pluralité de film(s) à base de polymère(s),
- chacun d'eux est une barrière à la vapeur d'eau, avec une perméabilité à la vapeur d'eau d'au plus 0,1 g/m$^2$/24h,

***caractérisé en ce qu'un*** au moins desdits substrats extérieurs comprend une feuille de polymère halogéné à base de polychlorotrifluoroéthylène (PCTFE).

**2.** Dispositif selon la revendication précédente, ***caractérisé en ce que*** le film fonctionnel électrochrome comprenant au moins deux couches à propriétés électrochromes séparées par un électrolyte et encadrées par des électrodes, notamment un film électrochrome « tout solide » ou "tout polymère" ou utilisant un électrolyte sous forme de polymère.

**3.** Dispositif selon l'une des revendications précédentes, ***caractérisé en ce qu'au*** moins un des substrats extérieurs est constitué d'au moins un film à base de polymère(s) portant, sur l'une de ses faces au moins, une ou plusieurs couches minérales minces.

**4.** Dispositif selon la revendication 3, ***caractérisé en ce que*** la couche minérale est dense et choisie parmi les dérivés de silicium comme $SiO_2$, $SiON$, $SiOC$, $Si_3N_4$ et/ou d'aluminium comme $AlN$ ou $Al_2O_2$, ou parmi des couches conductrices transparentes à base d'oxydes conducteurs dont l'oxyde d'indium dopé à l'étain, l'oxyde d'étain dopé, l'oxyde de zinc dopé, ces couches conductrices pouvant aussi jouer le rôle d'électrode au sein du film fonctionnel.

**5.** Dispositif selon l'une des revendications précédentes, ***caractérisé en ce que*** l'un au moins des substrats extérieurs comprend un film nanocomposite comprenant des composés minéraux de taille nanométrique à facteur de forme élevé, notamment de l'argile exfoliée par cisaillement dans une matrice polymère.

**6.** Dispositif selon l'une des revendications précédentes, *caractérisé en ce que* l'un au moins des substrats extérieurs comporte une pluralité de films à base de polymère(s) de perméabilités à la vapeur d'eau différentes, la combinaison desdits films permettant d'atteindre globalement une perméabilité à la vapeur d'eau inférieure à 0,1 g/m$^2$/24 h et une adhésion suffisante avec le film fonctionnel.

**7.** Dispositif selon l'une des revendications précédentes, *caractérisé en ce qu'*au moins l'un des deux substrats extérieurs comprend un substrat en verre, en polycarbonate (PC) ou en polyméthacrylate de méthyle (PMMA).

**8.** Dispositif selon l'une des revendications précédentes, *caractérisé en ce qu'il* présente deux substrats extérieurs sous forme de films à base de polymère flexibles.

**9.** Dispositif selon l'une des revendications précédentes, *caractérisé en ce qu'il* comporte également au moins un des revêtements suivants: revêtement réfléchissant au moins une partie des longueurs d'onde situées dans l'infrarouge et/ou l'ultraviolet, revêtement hydrophile ou hydrophobe, revêtement photocatalytique à propriétés anti-salissures, revêtement antireflets, revêtement de blindage magnétique.

**10.** Dispositif selon la revendication 9, *caractérisé en ce qu'*il est muni d'un empilement de couches minces anti-solaire, comprenant notamment deux couches d'argent.

**11.** Vitrage, notamment vitrage feuilleté ou vitrage multiple de type double-vitrage, *caractérisé en ce qu'il* incorpore le dispositif selon l'une des revendications précédent es.

**12.** Miroir, notamment rétroviseur, *caractérisé en ce qu'il* incorpore le dispositif selon l'une des revendications 1 à 10.

**13.** Miroir selon la revendication 12, *caractérisé en ce qu'il* comprend la séquence :
verre/film fonctionnel/revêtement réfléchissant/adhésif éventuel/polymère

**14.** Application du dispositif selon l'une des revendications 1 à 10 ou du vitrage selon la revendication 11 dans le domaine de l'aéronautique, du bâtiment, de l'automobile et tout moyen de locomotion aérien, terrestre ou maritime, notamment comme toit-auto de véhicule ou hublot d'avion, dans le domaine de l'ophtalmologie, en tant qu'écran de projection ou écran d'affichage, en tant qu'élément renforceur de contraste anti-éblouissement d'écran de télévision ou d'ordinateur ou de téléphone portable ou de tout dispositif d'affichage.

**Patentansprüche**

**1.** Elektrisch ansteuerbare elektrochrome Vorrichtung, umfassend zwei äußere Substrate und einen elektrochromen funktionellen Film, der eine Schicht oder einen Stapel von Schichten umfasst, und der zwischen den äußeren Substraten angeordnet ist, wobei die äußeren Substrate die folgenden Bedingungen erfüllen:

- mindestens eins ist im Wesentlichen transparent,
- mindestens eins basiert auf einem Film oder einer Vielzahl von Filmen auf Basis von Polymer(en),
- jedes davon ist eine Wasserdampfsperre mit einer Wasserdampfdurchlässigkeit von höchstens 0,1 g/m$^2$/24 Std.,

*dadurch gekennzeichnet, dass* mindestens eins der äußeren Substrate eine halogenisierte Polymerfolie auf Basis von Polychlortrifluorethylen (PCTFE) umfasst.

**2.** Vorrichtung nach dem vorangegangenen Anspruch, *dadurch gekennzeichnet, dass* der elektrochrome funktionelle Film mindestens zwei Schichten mit elektrochromen Eigenschaften umfasst, die durch einen Elektrolyten getrennt und von Elektroden umrahmt sind, insbesondere einen elektrochromen "vollständig festen", oder "vollständig aus Polymer" bestehenden Film oder der einen Elektrolyten in Polymerform verwendet.

**3.** Vorrichtung nach einem der vorangegangenen Ansprüche, *dadurch gekennzeichnet, dass* mindestens eins der äußeren Substrate aus mindestens einem Film auf Basis von Polymer(en) besteht, der auf mindestens einer seiner Seiten eine oder mehrere dünne Mineralschichten trägt.

**4.** Vorrichtung nach Anspruch 3, *dadurch gekennzeichnet, dass* die Mineralschicht dicht ist und aus den Silicium-

derivaten wie SiO$_2$, SiON, SiOC, Si$_3$N$_4$ und/oder Aluminiumderivaten wie AlN oder Al$_2$O$_3$ oder aus transparenten leitfähigen Schichten auf Basis leitfähiger Oxide einschließlich zinndotiertem Indiumoxid, dotiertem Zinnoxid, dotiertem Zinkoxid ausgewählt ist, wobei diese leitfähigen Schichten auch die Rolle einer Elektrode innerhalb des funktionellen Films spielen können.

**5.** Vorrichtung nach einem der vorangegangenen Ansprüche, *dadurch gekennzeichnet, dass* mindestens eins der äußeren Substrate einen Nanoverbundstofffilm umfasst, der nanoskalige mineralische Verbindungen mit hohem Formfaktor, insbesondere durch Scherung in einer Polymermatrix abgeschälten Ton, umfasst.

**6.** Vorrichtung nach einem der vorangegangenen Ansprüche, *dadurch gekennzeichnet, dass* mindestens eins der äußeren Substrate eine Vielzahl von Filmen auf Basis von Polymer(en) mit unterschiedlichen Wasserdampfdurchlässigkeiten umfasst, wobei die Kombination der Filme global eine Wasserdampfdurchlässigkeit von weniger als 0,1 g/m$^2$/24 Std. und eine ausreichende Haftung an dem funktionellen Film ermöglicht.

**7.** Vorrichtung nach einem der vorangegangenen Ansprüche, *dadurch gekennzeichnet, dass* mindestens eins der beiden äußeren Substrate ein Substrat aus Glas, aus Polycarbonat (PC) oder aus Polymethylmethacrylat (PMMA) umfasst.

**8.** Vorrichtung nach einem der vorangegangenen Ansprüche, *dadurch gekennzeichnet, dass* sie zwei äußere Substrate in Form von Filmen auf Basis von flexiblem Polymer aufweist.

**9.** Vorrichtung nach einem der vorangegangenen Ansprüche, *dadurch gekennzeichnet, dass* sie außerdem mindestens eine der folgenden Beschichtungen umfasst: Beschichtung, die mindestens einen Teil der Infrarot- und/oder Ultraviolettwellenlängen reflektiert, hydrophile oder hydrophobe Beschichtung, fotokatalytische Beschichtung mit schmutzabweisenden Eigenschaften, Antireflexbeschichtung, magnetische Abschirmbeschichtung.

**10.** Vorrichtung nach Anspruch 9, *dadurch gekennzeichnet, dass* sie mit einem Stapel von dünnen Anti-Solar-Schichten versehen ist, die insbesondere zwei Schichten Silber umfassen.

**11.** Verglasung, insbesondere Verbundverglasung oder Mehrfachverglasung vom Typ Doppelverglasung, *dadurch gekennzeichnet, dass* sie die Vorrichtung nach einem der vorangegangenen Ansprüche umfasst.

**12.** Spiegel, insbesondere Rückspiegel, *dadurch gekennzeichnet, dass* er die Vorrichtung nach einem der Ansprüche 1 bis 10 enthält.

**13.** Spiegel nach Anspruch 12, **dadurch gekennzeichnet, dass er** die Sequez:
Glas/funktioneller Film/Reflexionsbeschichtung/möglicherweise Klebstoff/Polymer umfasst.

**14.** Anwendung der Vorrichtung nach einem der Ansprüche 1 bis 10 oder der Verglasung nach Anspruch 11 in dem Bereich von Luftfahrt, Bauwesen, Automobil und allen Luft-, Land- oder Wasserverkehrsmitteln, insbesondere als Fahrzeugdach oder Flugzeugfenster, in der Ophthalmologie, als Projektionsschirm oder Bildschirm, als kontrastverstärkendes Blendschutz-Element eines Fernseh- oder Computerbildschirms oder eines tragbaren Telefons oder einer Anzeigevorrichtung.

**Claims**

**1.** An electrically controllable electrochromic device, comprising two external substrates and a functional electrochromic film consisting of a layer or a stack of layers and which is placed between the substrates which meet the following criteria:

- at least one is essentially transparent;
- at least one is based on one (or more) film(s) based on one or more polymers;
- each of them is a water vapor barrier, with a water vapor permeability of at most 0.1 g/m$^2$/24 h,

**characterized in that** at least one of the external substrates comprises a sheet of halogenated polymer based on polychlorotrifluorethylene (PCTFE).

**2.** The device as claimed in the preceding claim, ***characterized in that*** the electrochromic functional film comprises at least two layers having electrochromic properties separated by an electrolyte and flanked by electrodes, especially an "all-solid-state" or "all-polymer" electrochromic film or using an electrolyte in polymer form.

**3.** The device as claimed in one of the preceding claims, ***characterized in that*** at least one of the external substrates consists of at least one film based on one or more polymershaving, on at least one of is faces, one or more thin mineral layers.

**4.** The device as claimed in claim 3, ***characterized in that*** the mineral layer is dense and chosen from silicon derivatives such as $SiO_2$, $SiON$, $SiOC$, $Si_3N_4$ and/or aluminum derivatives such as AlN or $Al_2O_3$, or from among transparent conducting layers based on conducting oxides, including tin-doped indium oxide, doped tin oxide and doped zinc oxide, it being possible for these conducting layers also to act as electrodes within the functional film.

**5.** The device as claimed in one of the preceding claims, ***characterized in that*** at least one of the external substrates includes a nanocomposite film comprising mineral compounds of nanometric size with a high form factor, especially clay exfoliated by shear in a polymer matrix.

**6.** The device as claimed in one of the preceding claims, ***characterized in that*** at least one of the external substrates includes a plurality of films based on one or more polymers having different water vapor permeabilities, the combination of said films making it possible to achieve overall a water vapor permeability of less than 0.1 $g/m^2/24$ h and sufficient adhesion to the functional film.

**7.** The device as claimed in one of the preceding claims, ***characterized in that*** at least one of the two external substrates comprises a glass substrate, in polycarbonate (PC) or polymethyl methacrylate (PMMA).

**8.** The device as claimed in one of the preceding claims, ***characterized in that*** it has two external substrates in the form of films based on one or more flexible polymers.

**9.** The device as claimed in one of the preceding claims, ***characterized in that*** it also includes at least one of the following coatings: a coating reflecting at least some of the wavelengths lying in the infrared and/or the ultraviolet, a hydrophilic or hydrophobic coating, a photocatalytic coating having antisoiling properties, an anti-reflection coating, or a coating providing magnetic shielding.

**10.** The device as claimed in claim 9, ***characterized in that*** it is provided with a stack of thin layers for solar protection, comprising especially two silver layers.

**11.** Glazing, especially laminated glazing or multiple glazing of the double-glazing type, ***characterized in that*** it incorporates the device as claimed in one of the preceding claims.

**12.** A mirror, especially a rear-view mirror, ***characterized in that*** it incorporates the device as claimed in one of claims 1 to 10.

**13.** The mirror as claimed in claim 12, ***characterized in that*** it comprises the following sequence: glass/functional film/reflecting coating/optional adhesive/polymer.

**14.** An application of the device as claimed in one of claims 1 to 10 or of the glazing as claimed in claim 11 in the aeronautics, building or automobile field, and any means of locomotion in the air, on land or in the sea, especially as a vehicle sunroof or aircraft cabin window, in the field of ophthalmology, as a projection screen or display screen, as a contrast-enhancing/antidazzle element for a television screen or computer screen, or for a mobile telephone or any other display device.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5239406 A
- EP 612826 A
- EP 867752 A
- EP 831360 A
- WO 0003289 A
- WO 0057243 A
- EP 253713 A
- EP 670346 A
- JP 62040432 A
- US 5833070 A
- US 5530581 A
- US 20010005274 A
- FR 2770222
- WO 9309460 A
- EP 88126 A
- EP 268877 A
- EP 238164 A
- EP 357234 A
- EP 409442 A
- EP 964288 A
- EP 132198 A
- EP 131523 A
- EP 389354 A
- EP 1078299 A
- EP 638528 A
- EP 718250 A
- EP 844219 A
- EP 847965 A
- EP 1010677 A
- FR 002582
- EP 825478 A